# EUROPÄISCHE PATENTSCHRIFT

(11) **EP 1 831 047 B1**
(45) Veröffentlichungstag und Bekanntmachung des Hinweises auf die Patenterteilung: **19.06.2013**
(21) Anmeldenummer: 05820146.8
(22) Anmeldetag: 23.11.2005
(51) Int. Cl.: F01P 7/12, B60K 11/08

(54) **VORRICHTUNG ZUR REGULIERUNG EINES LUFTSTROMS**
DEVICE FOR REGULATING AN AIRFLOW
PROCEDE POUR REGULER UN ECOULEMENT D'AIR

(30) Priorität: 21.12.2004 DE 102004062689
(43) Veröffentlichungstag der Anmeldung: 12.09.2007
(73) Patentinhaber: Behr GmbH & Co. KG, 70469 Stuttgart (DE)
(72) Erfinder: HARICH, Martin, 71638 Ludwigsburg (DE)
(74) Vertreter: Grauel, Andreas
(86) Internationale Anmeldenummer: PCT/EP2005/012502
(87) Internationale Veröffentlichungsnummer: WO 2006/066680

(56) Entgegenhaltungen:
- DE-A1- 2 359 388
- DE-A1- 2 439 033
- DE-A1- 3 942 010
- DE-A1- 4 304 336
- DE-A1- 10 306 158

## Beschreibung

Die Erfindung betrifft eine Vorrichtung zur Regulierung eines Luftstroms nach dem Oberbegriff des Anspruchs 1.

DE 4 304 336 A1 wird als nächstliegender Stand der Technik angesehen und offenbart alle Merkmale des Oberbegriffs des Anspruchs 1.

Bei Kraftfahrzeugen ist die Verwendung von Staudruckklappen in Luftdurchtritten bekannt. Unter Staudruckklappen versteht man dabei allgemein den Luftdurchtritt begrenzende oder verschließende Klappen, die bei Vorliegen einer Luftdruckdifferenz öffnen. Die Luftdruckdifferenz kann durch Fahrtwind oder auch durch Einwirkung eines Ventilators entstehen.

DE 24 39 033 A1 beschreibt einen Hauptkühler für einen Kraftfahrzeugmotor mit einem saugend angeordneten Ventilator und einem randseitigen Luftleitmantel. Um optimale Luftströmung für verschiedene Betriebsbedingungen bereitzustellen, sind im Luftleitmantel federbelastete Staudruckklappen vorgesehen, die ab einer ausreichenden Fahrtgeschwindigkeit durch den Fahrtwind aufgedrückt werden.

Es kann allerdings gewünscht sein, daß die Steuerung des Luftstroms noch flexibler ist, um einer größeren Anzahl unterschiedlicher Betriebsbedingungen gerecht zu werden.

DE 103 06 158 A1 beschreibt ein Luftklappensystem für den Hauptkühlerbereich eines Kraftfahrzeugs, bei dem eine Mehrzahl von Luftklappen mittels einer Antriebsvorrichtung stellbar sind. Hierdurch ist zwar eine große Flexibilität der Steuerung des Luftstroms gegeben, jedoch ist eine solche Lösung aufwendig, kostenintensiv und störanfällig.

Es ist die Aufgabe der Erfindung, eine Vorrichtung zur Regulierung eines Luftstroms für ein Kraftfahrzeug zu schaffen, bei der eine erhöhte Flexibilität der Luftstromsteuerung mit einfachen und kostengünstigen Mitteln ermöglicht ist.

Diese Aufgabe wird für eine eingangs genannte Vorrichtung erfindungsgemäß mit den kennzeichnenden Merkmalen des Anspruchs 1 gelöst.

Durch die lösbare Verriegelung des Klappenelements mittels des Riegelelements ist eine erhöhte Flexibilität geschaffen, da die Luftklappe wählbar auch bei anliegender Druckdifferenz geschlossen bleibt oder nur bis zum einem Teil öffnungsfähig ist. Falls die Klappe den Luftdurchtritt für einen Hauptkühler des Fahrzeugs regelt, kann hierdurch zum Beispiel ein zusätzlicher Kaltstartmodus zum schnelleren Erwärmen des Motors erzielt werden. Es kann je nach Anforderungen vorgesehen sein, daß die Luftklappe bzw. das Klappenelement nur in ihrer geschlossenen Stellung lösbar festlegbar ist. Es kann alternativ oder ergänzend auch vorgesehen sein, daß das Riegelelement einen lösbaren Anschlag einer teilweise geöffneten Stellung ausbildet, der in seiner Position auch veränderbar sein kann. Das Riegelelement als Anschlag würde somit eine Verriegelung entgegen der durch den Druckunterschied verursachte Bewegungsrichtung der Luftklappe darstellen, nicht jedoch in der dazu entgegengesetzten Bewegungsrichtung. Allen erfindungsgemäßen Vorrichtungen ist dabei gemeinsam, daß das Klappenelement in einem regulären Betriebszustand die Eigenschaft einer frei beweglichen, daß heißt lediglich durch Luftdruckunterschiede bewegten, Staudruckklappe aufweist.

In bevorzugter Ausbildung ist das Klappenelement um eine Drehachse drehbar gelagert, wodurch das Klappenelement einfach und kostengünstig ausbildbar ist. Eine rückstellende Wirkung um die Drehachse kann dabei entweder allein durch die Schwerkraft oder durch eine Feder oder durch eine Kombination von Schwerkraft oder Feder erfolgen. Um eine besonders schwingungs- und widerstandsarme Stabilisierung des Klappenelements im geöffneten Zustand zu erreichen, ist zudem bevorzugt vorgesehen, daß ein Auftriebsschwerpunkt des Klappenelements bei geöffnetem Klappenelement in Strömungsrichtung hinter der Drehachse (D) liegt. Hierdurch werden Auftriebskräfte genutzt, die durch Vorbeiströmen der Luft an dem Klappenelement auftreten. Diese Auftriebskräfte treten auch bei vollständig eben ausgeführtem Klappenelement auf, insofern dieses gegenüber dem Luftstrom eine leichte Schrägstellung aufweist. Besonders große Auftriebskräfte treten bei entsprechender Profilierung des Klappenelements auf (Tragflächenprinzip). Durch die genannte Anordnung der Drehachse vor dem Auftriebsschwerpunkt üben die Auftriebskräfte ein Drehmoment in Öffnungsrichtung der Klappe aus.

Weiterhin bevorzugt sind zumindest zwei Klappenelemente vorgesehen, um größere Luftdurchtritte ohne allzu ausladende Bewegungen der Klappen überdecken zu können. Bevorzugt können dabei die Klappenelemente zwangsgesteuert miteinander verbunden sein, so daß eine Verriegelung oder definierbare Wegbegrenzung für eine Klappe einen entsprechenden Effekt auf die weitere Klappe hat. Besonders bevorzugt ist dabei vorgesehen, daß die beiden Klappenelemente in einem geschlossenen Klappenzustand unmittelbar dichtend aneinander anliegen. Hierdurch kann auf zusätzliche Streben des Rahmenelements zur Anlage der Klappenelemente verzichtet werden, die im geöffneten Zustand eine Beschränkung der freien Durchtrittsfläche darstellen würden.

In einer bevorzugten Ausführungsform der Erfindung ist das Riegelelement mittels eines Aktuators antreibbar bewegbar. Ein Aktuator kann dabei jedwede antreibende Stellvorrichtung sein, die in Abhängigkeit von zumindest einem Parameter eine mechanische Bewegung des Riegelelements bewirkt. Besonders bevorzugt umfaßt der Aktuator dabei einen auf Temperaturveränderungen reagierenden Mechanismus. Auf diese Weise kann eine einfache und kostengünstige temperaturabhängige Regelung des Verriegelungszustandes des Klappenelementes realisiert werden. Alternativ oder ergänzend hierzu kann der Aktuator jedoch elektromechanische Komponenten umfassen und gegebenenfalls mittels einer Steuerungselektronik ansteuerbar sein. Hierdurch sind durchaus einfachere und kostengünstigere Versionen einer erfindungsgemäßen Vorrichtungen ausbildbar, als dies im Fall vollständig angetriebener bzw. stellbarer Luftklappen der Fall wäre.

Gemäß der Erfindung umfasst das Riegeielement eine von dem Aktuator antreibbare Drehwelle. Bevorzugt ist dabei ein Sperrmittel an der Drehwelle vorgesehen, mittels dessen das Klappenelement in geschlossener Position lösbar festlegbar ist. Hierdurch ist eine einfache und zuverlässige mechanische Realisierung eines Riegelelements ermöglicht. In diesem Sinne besonders bevorzugt ist dabei an der Drehwelle eine Mehrzahl von Sperrmitteln vorgesehen, die einer Mehrzahl von Klappenelementen jeweils zugeordnet sind.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer erfindugnsgemäßen Vorrichtung beschrieben und anhand der anliegenden Zeichnungen näher erläutert.
- Fig. 1: zeigt eine räumliche Ansicht einer erfindungsgemäßen Vorrichtung mit dem Luftstrom zugewandter Seite bei geschlossenen Klappenelementen.
- Fig. 2: zeigt die Vorrichtung aus Fig. 1 von der dem Luftstrom abgewandten Seite.
- Fig. 3: zeigt die dem Luftstrom zugewandte Seite der Vorrichtung aus Fig. 1 bei geöffneten Klappenelementen.
- Fig. 4: zeigt eine Detailansicht der dem Luftstrom abgewandten Seite der Vorrichtung aus Fig. 1 bei geöffneten Klappenelementen.
- Fig. 5: zeigt eine räumliche Detaildarstellung eines Klappenelements der Vorrichtung aus Fig. 1.
- Fig. 6: zeigt eine Abwandlung der Vorrichtung aus Fig. 1, wobei die Klappenelemente ein Tragflächenprofil aufweisen.
- Fig. 7: zeigt die Abwandlung aus Fig. 6 in einer geöffneten Klappenstellung.

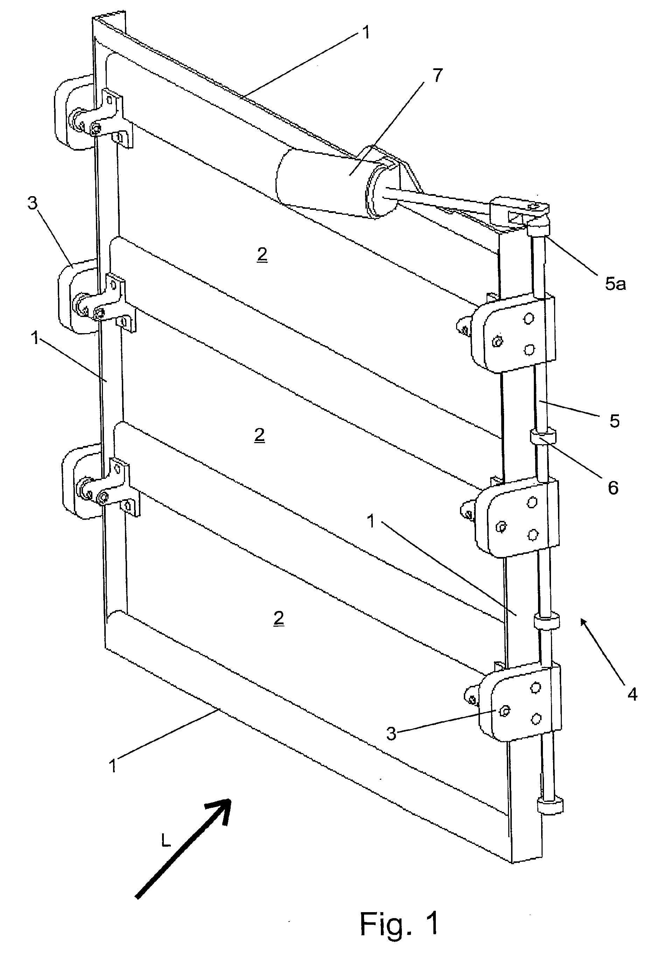

Die erfindungsgemäße Vorrichtung gemäß Fig. 1 findet Einsatz als Kühlerjalousie in Richtung des Fahrtwindes hinter dem Kühfmittefkühler des Motors eines Kraftfahrzeugs. Sie umfaßt ein Rahmenelement 1, welches nicht nur eine äußere Begrenzung einer Durchtrittsfläche für einen Luftstrom darstellt, sondern auch eine Halterung für drei Klappenelemente 2.

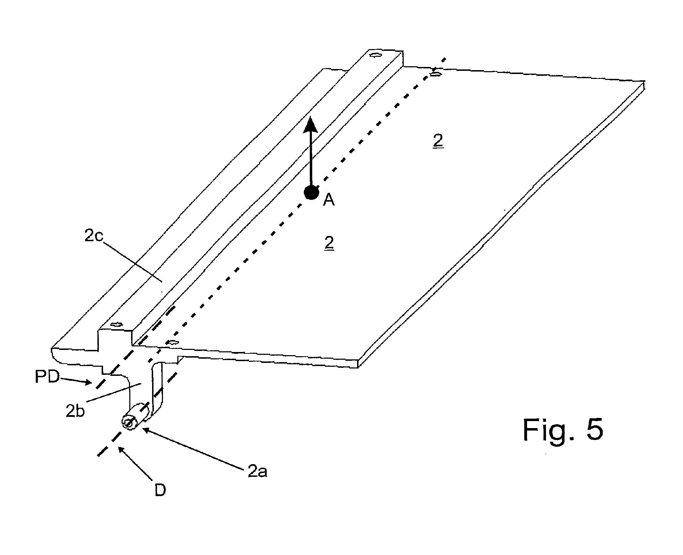

Die drei Klappenelemente 2 sind jeweils gleichteilig ausgebildet (siehe Darstellung in Fig. 5). Jedes der Klappenelemente 2 hat zwei Drehzapfen 2a, mittels derer es um eine Drehachse schwenkbar in dem Rahmenelement 1 gelagert ist. Die Aufnahme der Drehzapfen 2a erfolgt jeweils in an dem Rahmenelement 1 montierten Lagerböcken 3.

Jedes der Klappenelemente 2 dichtet im geschlossenen Zustand mit einer Längskante jeweils unmitelbar an einem benachbarten Klappenelement 2 ab. Zur Verbesserung der Abdichtung und zur Geräuschdämmung kann eine Vorderkante 2d (siehe Fig. 5) besonders ausgeformt und mit einem gummiartigen oder weichen Bezug versehen sein. Durch die Abdichtung der Klappenelemente aneinander ist es nicht notwendig, daß das Rahmenelement Querstreben umfaßt, die sonst zwischen den benachbarten Klappenelementen angeordnet wären.

Das Klappenelement 2 ist ein im wesentlichen ebener, rechteckiger Plattenkörper, wobei die Drehachse D (siehe Fig. 5) mittels Abstandsschenkeln 2b der Drehzapfen 2a außerhalb der Ebene angeordnet ist. Ferner liegt die Projektion der Drehachse D auf den Plattenkörper parallel zu seinen Längsseiten und teilt den Plattenkörper etwa im Verhältnis eins zu vier in einen Abschnitt oberhalb und einen Abschnitt unterhalb der Drehachse. Das Rahmenelement 1 ist im Fahrzeug im wesentlichen senkrecht angeordnet und der kürzere Abschnitt des Plattenkörpers ist oberhalb seiner zugeordneten Drehachse angeordnet. Hierdurch bewirkt allein die Schwerkraft ein zum Schließen der Klappen ausreichendes Drehmoment, so daß im vorliegenden Ausführungsbeispiel auf eine Rückstellfeder verzichtet wurde. Zur Austarierung der Rückstellkräfte sind an dem Klappenelement 2 Verdickungen 2c vorgesehen, die auch aus einem Material hoher Dichte bestehen können.

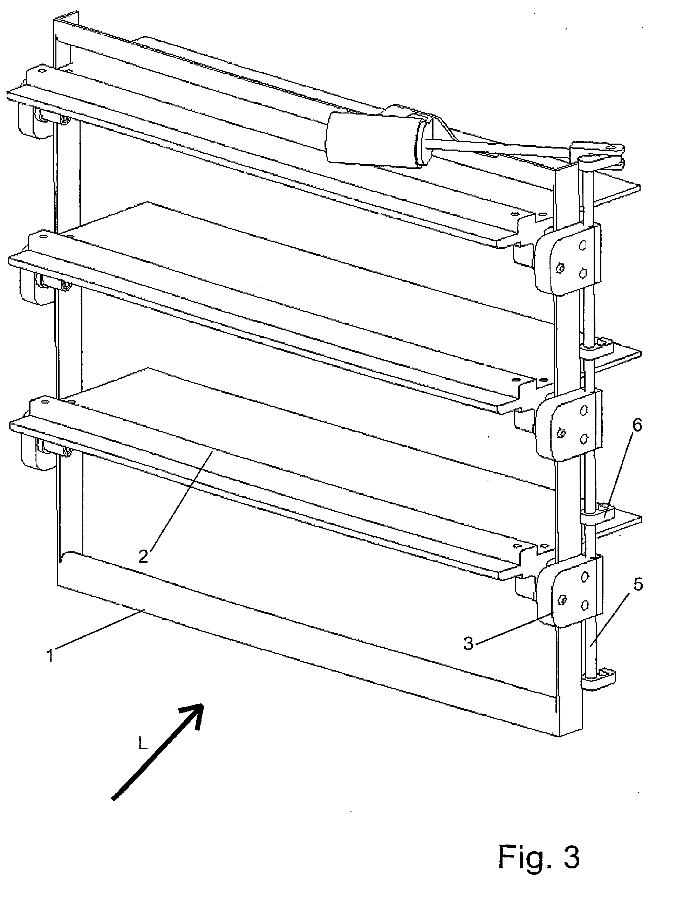

Im montierten Zustand gemäß Fig. 1 liegen die Abstandsschenkel auf der dem Luftstrom zugewandten Seite. Der Pfeil L in Fig. 1 deutet in Richtung abfallenden Luftdrucks. Der Druckabfall kann durch Fahrtwind oder auch durch einen Lüfter in Druck- oder Saugbetrieb verursacht sein. Da die Projektion PD der Drehachse D den Plattenkörper asymmetrisch teilt, bewirkt eine Druckdifferenz zwischen Vorder- und Hinterseite des Klappenelements ein resultierendes Drehmoment in Öffnungsrichtung der Klappe. Dies ist aus einem Vergleich von Fig. 1 mit Fig. 3 (geöffneter Zustand durch einwirkenden Luftstrom) ersichtlich.

Vorliegend wurde bei der Ausgestaltung der Klappe zudem berücksichtigt, daß im geöffneten Klappenzustand die Klappe Auftriebskräfte nach Art einer Tragfläche erfährt, die senkrecht zu ihrer Oberfläche wirken. Der Auftriebsschwerpunkt A (siehe Fig. 5) liegt dabei in Strömungsrichtung rund ein Drittel der Klappenlänge hinter der dem Luftstrom zugewandten Kante. Die Drehachse D ist gemäß Fig. 5 in Strömungsrichtung noch vor dem Auftriebsschwerpunkt (Punkt A bzw. kurzgestrichelte Linie) angeordnet, so daß die Auftriebskraft ein Drehmoment in Öffnungsrichtung bewirkt. Das aus der Gewichtskraft der Klappe resultierende Drehmoment in Schließrichtung ist durch die Verdickung 2c teilweise kompensiert, wobei die Verdickung 2c zugleich eine die Auftriebskraft begünstigende Profilierung bewirkt. Es ist ersichtlich, daß aufgrund der Beabstandung der Drehachse mittels des Schenkels 2b und dem Tariergewicht 2c bei kleinen Auslenkung aus der geöffneten in Richtung geschlossene Position das Drehmoment der Gewichtskraft (Schließrichtung) zunächst wenig veränderlich ist, wogegen sich das Drehmoment durch die Auftriebskraft sofort vergrößert. Somit liegt eine gute Stabilisierung der geöffneten Position bei vorhandener Luftströmung vor, ohne daß die Gefahr von Schwingungen bzw. Flattern der Klappe besteht.

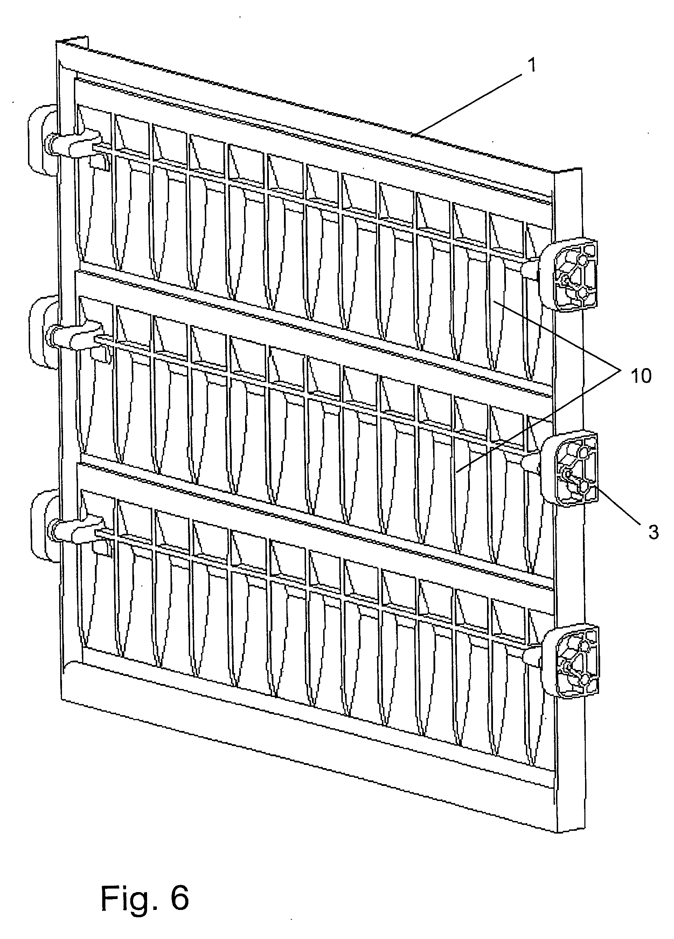

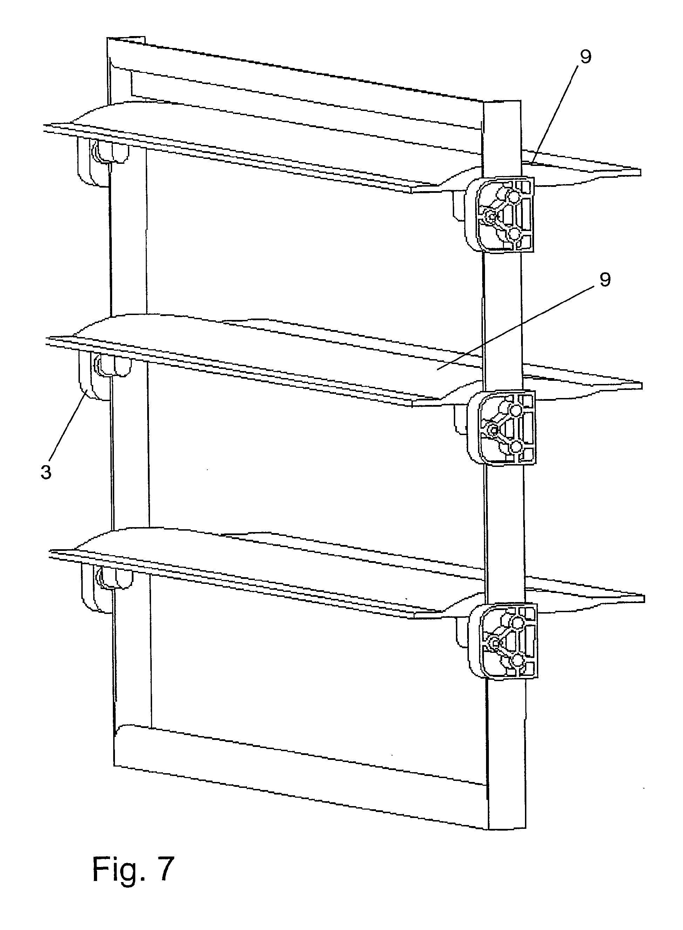

Die in Fig. 6 und Fig. 7 gezeigte Abwandlung stellt eine Optimierung der Form hinsichtlich der genannten Auftriebskraft dar, die die gezeigten Klappen ein Tragflächenprofil mit einem gekrümmten Bereich 9 aufweisen. Zudem sind sie mittels Rippen 10 besonders leichtbauend konstruiert. Das Riegelelement 4 ist in den Fig. 6 und Fig. 7 der Abwandlung nicht gezeigt, dort jedoch in gleicher Weise vorhanden.

An einer der im wesentlichen senkrechten Seiten des Rahmenelements 1 ist ein Riegelelement 4 vorgesehen, mittels dessen jedes der Klappenelemente 2 in der geschlossenen Stellung arretierbar bzw. lösbar verriegelbar ist. Das Riegelelement 4 umfaßt eine Drehwelle 5. Zur Vermeidung zusätzlicher Bauteile ist die Drehwelle 5 an den Lagerböcken 3 drehbar gelagert.

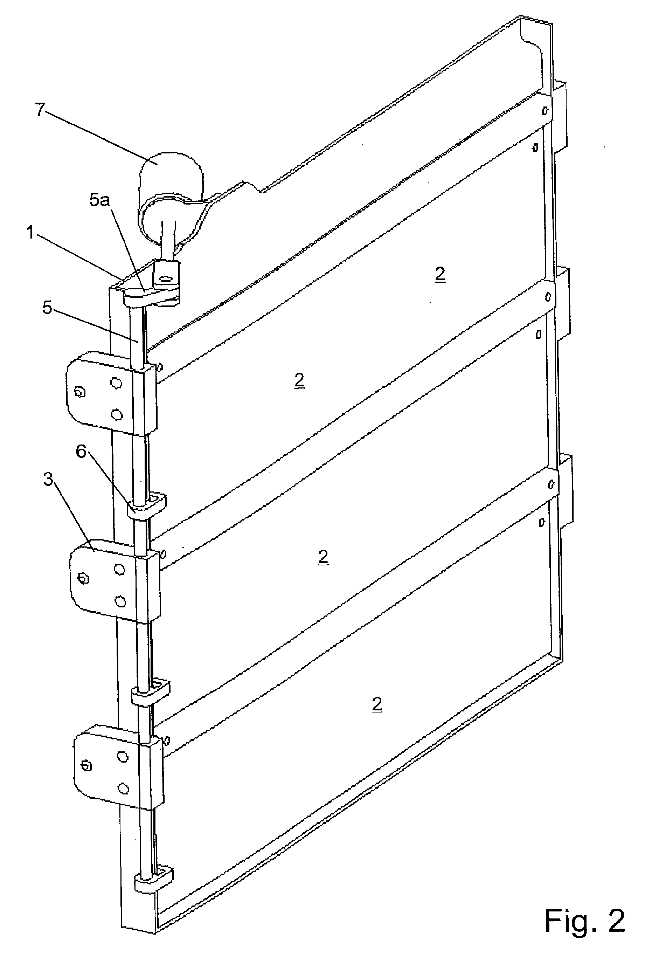

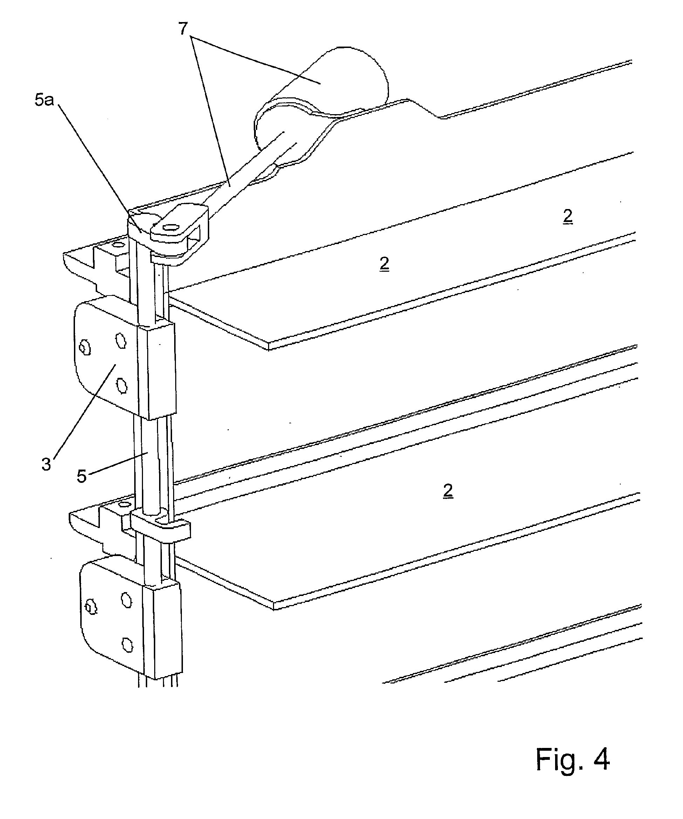

An der Drehwelle 5 sind drei hakenförmige Sperrmittel 6 festgelegt, wobei jedes der Sperrmittel 6 jeweils einem der Klappenelemente 2 zugeordnet ist. Die Sperrmittel 6 weisen je nach Winkelstellung der Drehwelle 5 eine geschlossene Stellung (siehe Fig. 2) und eine geöffnete Stellung (siehe Fig. 3, Fig. 4) auf. In der geschlossenen Stellung drückt eine vordere Stirnfläche des hakenförmigen Sperrmittels 6 gegen das ihm zugeordnete geschlossene Klappenelement, so daß dieses nicht aufschwenken kann. Ein Verdrehen der Drehwelle 5 führt zu einer Freigabe des Klappenelements 2. Dabei kann je nach Dimensionierung und Plazierung des Sperrmittels 6 auch erreicht werden, daß durch ein nur teilweises Drehen der Welle 5 aus der geschlossenen Stellung heraus zwar eine Freigabe des Klappenelements 2 bewirkt ist, dieses sich jedoch noch nicht vollständig öffnen kann. In einer solchen Zwischenstellung bildet das Sperrmittel 6 vielmehr einen Anschlag für eine teilweise geöffnete Stellung des Klappenelements 2.

Die Drehwelle 5 ist über einen Zapfen 5a mittels eines Aktuators 7 antreibbar verdrehbar. Der Aktuator 7 ist an dem Rahmenelement 1 festgelegt. Es handelt sich vorliegend um einen rein mechanischem Aktuator, der auf seine Umgebungstemperatur reagiert. Bei Anstieg der Temperatur über einen gewissen Wert fährt eine Schubstange aus dem Aktuator aus und entriegelt durch ein Verdrehen der Drehwelle 5 die geschlossenen Klappenelemente 2. Sinnvoll ist der Aktuator bzw. die Vorrichtung so angeordnet, daß die den Aktuator umströmende Luft zuvor in thermischem Kontakt mit dem Kühler des Kraftfahrzeugs gestanden hat. Auf diese Weise wird eine Betätigung des Aktuators und somit eine Freigabe der Klappenelemente erfolgen, sobald der Motor eine gewisse Betriebstemperatur erreicht hat. Hierdurch ist eine verkürzte Kaltstartphase des Motors erreichbar, indem die Klappenelemente 2 bei kaltem Motor auch bei hoher Fahrtgeschwindigkeit nicht öffnen.

Derartige Aktuatoren sind allgemein bekannt. Sie können etwa Dehnstoffelemente zur Betätigung der Schubstange enthalten. Sie können entweder, wie beschrieben, passiv sein oder auch eine zusätzliche Heizung aufweisen.

## Patentansprüche

1. Vorrichtung zur Regulierung eines Luftstroms für ein Kraftfahrzeug, umfassend
ein eine Durchtrittsfläche des Luftstroms zumindest teilweise umfangendes Rahmenelement (1) und
ein gegenüber dem Rahmenelement (1) verstellbar aufgenommenes Klappenelement (2), wobei die Durchtrittsfläche für den Luftstrom durch eine Verstellung des Klappenelements (2) veränderbar ist, wobei das Klappenelement (2) durch eine Kraftwirkung des Luftstroms von einer ersten, insbesondere geschlossenen Stellung in eine zweite, zumindest teilweise geöffnete Stellung bewegbar ist,
wobei ein mittels eines Aktuators (7) antreibbar bewegbares Riegelelement (4) vorgesehen ist, wobei das Klappenelement (2) in zumindest einer Stellung durch das Riegelelement (4) zumindest entgegen der von dem Luftstrom bewirkten Bewegungsrichtung des Klappenelements (2) lösbar verriegelbar ist,
**dadurch gekennzeichnet, daß**
das Riegelelement (4) eine von dem Aktuator (7) antreibbare Drehwelle (5) umfaßt, an der zumindest ein Sperrmittel (6) vorgesehen ist, welches an der Drehwelle (5) festgelegt ist und mittels dessen das Klappenelement (2) in geschlossener Position lösbar festlegbar ist.

2. Vorrichtung nach Anspruch 1, **dadurch gekennzeichnet, daß** das Klappenelement (2) um eine Drehachse (D) drehbar gelagert ist.

3. Vorrichtung nach Anspruch 2, **dadurch gekennzeichnet, daß** ein Auftriebsschwerpunkt (A) des Klappenelements bei geöffnetem Klappenelement in Strömungsrichtung hinter der Drehachse (D) liegt.

4. Vorrichtung nach einem der vorhergehenden Ansprüche, **dadurch gekennzeichnet, daß** zumindest zwei Klappenelemente (2) vorgesehen sind.

5. Vorrichtung nach Anspruch 4, **dadurch gekennzeichnet, daß** die beiden Klappenelemente in einem geschlossenen Klappenzustand unmittelbar dichtend aneinander anliegen.

6. Vorrichtung nach Anspruch 4 oder 5, **dadurch gekennzeichnet, daß** das zweite Klappenelement zwangsgesteuert mit dem ersten Klappenelement verbunden ist.

7. Vorrichtung nach einem der vorhergehenden Ansprüche, **dadurch gekennzeichnet, daß** der Aktuator (7) einen auf Temperaturveränderungen reagierenden Mechanismus umfaßt.

8. Vorrichtung nach einem der vorhergehenden Ansprüche, **dadurch gekennzeichnet, daß** der Aktuator (7) elektromechanische Komponenten umfaßt und mittels einer Steuerungselektronik ansteuerbar ist.

9. Vorrichtung nach einem der vorhergehenden Ansprüche, **dadurch gekennzeichnet, daß** an der Drehwelle (5) eine Mehrzahl von Sperrmitteln (6) vorgesehen sind, die einer Mehrzahl von Klappenelementen (2) jeweils zugeordnet sind.

## Claims

1. A device for regulating an airflow for a motor vehicle, comprising a frame element (1) at least partially surrounding a passage area of the airflow and a flap element (2), which is mounted so as to be displaceable relative to the frame element (1), wherein the passage area for the airflow can be altered by a displacement of the flap element (2), wherein the flap element (2) is movable from a first, in particular closed position into a second at least partly open position as a result of a force of the airflow, wherein a locking element (4) movable in a manner drivable by means of an actuator (7) is provided, wherein the flap element (2) is releasably lockable in at least one position by the locking element (4), at least counter to the direction of movement of the flap element (2) caused by the airflow, **characterised in that** the locking element (4) comprises a rotary shaft (5), which is drivable by the actuator (7) and on which at least one blocking means (6) is provided, which is fixed on the rotary shaft (5) and by means of which the flap element (2) can be releasably fixed in the closed position.

2. The device according to claim 1, **characterised in that** the flap element (2) is mounted rotatably about an axis of rotation (D).

3. The device according to claim 2, **characterised in that** a centre of gravity of lift (A) of the flap element when the flap element is open is arranged after the axis of rotation (D) in the direction of flow.

4. The device according to one of the preceding claims, **characterised in that** at least two flap elements (2) are provided.

5. The device according to claim 4, **characterised in that** the two flap elements in a closed flap state bear against one another directly in a sealing manner.

6. The device according to claim 4 or 5, **characterised in that** the second flap element is connected to the first flap element in a forcibly controlled manner.

7. The device according to one of the preceding claims, **characterised in that** the actuator (7) comprises a mechanism responding to temperature changes.

8. The device according to one of the preceding claims, **characterised in that** the actuator (7) comprises electromechanical components and can be controlled by means of control electronics.

9. The device according to one of the preceding claims, **characterised in that** a plurality of blocking means (6) are provided on the rotary shaft (5) and are each assigned a plurality of flap elements (2).

## Revendications

1. Dispositif de régulation d'un flux d'air pour un véhicule à moteur, comprenant un élément cadre (1) comprenant au moins partiellement une surface de passage du flux d'air et un élément de volet (2) logé en étant réglable par rapport à l'élément cadre (1), où la surface de passage prévue pour le flux d'air peut être modifiée par un réglage de l'élément de volet (2), où l'élément de volet (2) peut être déplacé par un effet dynamique du flux d'air, ledit élément de volet passant d'une première position en particulier fermée, à une deuxième position au moins partiellement ouverte, où il est prévu un élément de verrouillage (4) mobile et pouvant être entraîné au moyen d'un actionneur (7), où l'élément de volet (2) peut être verrouillé de façon amovible dans au moins une position, par l'élément de verrouillage (4), au moins en s'opposant à la direction de mouvement - déclenchée par le flux d'air - de l'élément de volet (2), **caractérisé en ce que** l'élément de verrouillage (4) comprend un arbre de rotation (5) pouvant être entraîné par l'actionneur (7), arbre de rotation sur lequel il est prévu au moins un moyen de blocage (6) qui est fixé sur l'arbre de rotation (5) et au moyen duquel l'élément de volet (2) peut être fixé de façon amovible en position fermée.

2. Dispositif selon la revendication 1, **caractérisé en ce que** l'élément de volet (2) est monté de façon à pouvoir tourner autour d'un axe de rotation (D).

3. Dispositif selon la revendication 2, **caractérisé en ce qu'**un centre de gravité (A) de la poussée verticale de l'élément de volet, quand l'élément de volet est ouvert, se trouve derrière l'axe de rotation (D) suivant la direction d'écoulement.

4. Dispositif selon l'une quelconque des revendications précédentes, **caractérisé en ce qu'**il est prévu au moins deux éléments de volet (2).

5. Dispositif selon la revendication 4, **caractérisé en ce que** les deux éléments de volet, quand ils sont fermés, sont directement en appui l'un contre l'autre de façon étanche.

6. Dispositif selon la revendication 4 ou 5, **caractérisé en ce que** le deuxième élément de volet est relié au premier élément de volet, par une commande forcée.

7. Dispositif selon l'une quelconque des revendications précédentes, **caractérisé en ce que** l'actionneur (7) comprend un mécanisme réagissant à des variations de températures.

8. Dispositif selon l'une quelconque des revendications précédentes, **caractérisé en ce que** l'actionneur (7) comprend des composants électromécaniques et peut être actionné au moyen d'une électronique de commande.

9. Dispositif selon l'une quelconque des revendications précédentes, **caractérisé en ce qu'**il est prévu, sur l'arbre de rotation (5), une pluralité de moyens de blocage (6) qui sont associés à chaque fois à une pluralité d'éléments de volets (2).
